# EUROPEAN PATENT APPLICATION

(11) **EP 2 073 542 A2**
(43) Date of publication of application: **24.06.2009**
(21) Application number: 08167693.4
(22) Date of filing: 28.10.2008
(51) Int. Cl.: H04N 7/14, G06T 1/00

(54) **Digital picture frame with cordless phone**

(30) Priority: 19.11.2007 US 942264
(71) Applicant: CCT Tech Advanced Products Limited, Fo Tan, Shatin, Hong Kong (CN)
(72) Inventor: Li, Man To, Hong Kong (CN); Mueller, Karl-Heinz Christian, Hong Kong, Tsing Yi, New Territorries (CN); Li, Kin Kwok, Hong Kong, Sheung Shui New Territorries (CN); Mak, Shiu Tong, Hong Kong, Central Hong Kong (CN); Mak, Chun Kiu, Hong Kong, Chai Wan Hong Kong (CN); Mak, Wun Yin, Hong Kong, Chai Wan Hong Kong (CN)
(74) Representative: Pröll, Jürgen

(57) **Abstract**

A method and device for image display with cordless phone 120. In particular, the claimed invention relates to an image display which can access the Internet 110 in wired or wireless fashion and interact with a DECT/CATiq phone 126 to make calls or send emails.

## Description

### TECHNICAL FIELD

The claimed invention relates generally to an image display and in particular, an image display capable of being used with a cordless phone where such image display is a standalone photo display device which provides telephony services and Internet connectivity via wired or wireless technologies or both.

### BACKGROUND ART

Remote photo display devices have recently made their way to the market place but the standalone devices often have no communication ability or very limited communication ability at best.

### SUMMARY OF THE INVENTION

The claimed invention discloses a digital image display with or without DECT/CATiq phone capability. The image display includes a wired or wireless transceiver that can exchange digital images among a list of predetermined servers through client-server connection and to another photo frame. The connectivity allows the images to be constantly and instantly updated.

The digital image display can also provide people with a variety of options for interaction such as browsing the webpages, sharing images with others, and sending/receiving emails, instant messaging, blogging, retrieving instant information such as news, stock quotes, exchange rates and weather information through the Internet but not limited to those listed applications. To send an email or instant message with a DECT/CATiq phone enabled device according to the claimed invention, the invention introduces a shortcut such that people can simply dial recipients' phone numbers and the image display can look up the recipients' email addresses or contacts of instant messaging in the built-in address book. In addition, a person need not remember the number or name of recipient any more but just recognize the recipient face through the image display for sending emails, IM (Instant Message), SMS (Short Message Service) as well as making phone calls or sharing images.

As an advertisement display board, people can see various advertisements in the image display and make a phone call or send an email to make an order instantly and conveniently.

Furthermore, with optional DECT/CATiq phone connectivity and image display capability, when there is an incoming phone call, the caller's photo and personal information in the addressbook can be displayed as well. As the image display is equipped with wired or wireless broadband connectivity, such as DSL (Digital Scriber Line), ADSL (Asymmetric Digital Scriber Line), cable modem, fiber optics, WiFi, WiMAX, GPRS (General Packet Radio Service), EDGE (Enhanced Data Rates for GSM Evolution), HSDPA (HighSpeed Downlink Packet Access), Bluetooth, ZigBee but not limited to these listed technologies, it can play not only multimedia files in its internal storage media but also any multimedia clips available online through downloading or streaming. The image display module in other embodiments accepts various audio clips in different formats such as MP3, WMA, and WAV files, as well as video clips in a variety of forms such as MPEG-2, MPEG-4, AVI, WMV, DivX, Xvid, QuickTime, and RealVideo available in the servers using the state-of-the-art Internet file-sharing technologies such FTP (File Transfer Protocol), HTTP (HyperText Transfer Protocol), BT (BitTorrent), eDonkey, Kad (Kademlia Peer-to-Peer Overlay Protocol), but not limited to these listed technologies. For audio and video streaming, the image display module accepts various audio/video streams based on various available streaming technologies, such as RTSP (Real Time Streaming Protocol), RTP (Real-time Transport Protocol), RTCP (Real-time Transport Control Protocol), RealNetworks RDT, Microsoft Media Services, Icecast, Shoutcast, QuickTime, BT (BitTorrent), and RSS (Really Simple Syndication)_ but not limited to these listed streaming technologies.

### BRIEF DESCRIPTION OF THE DRAWINGS

These and other objects, aspects and embodiments of the claimed invention will be described in more details with reference to the following drawings, in which:
FIG. 1 shows an exemplary environment for implementing the claimed invention.
FIG. 2 shows an embodiment housing both a digital image display module and a DECT module in a single unit.
FIG. 3 shows an embodiment housing a digital image display module and a DECT module housed in two separate units.
FIG. 3a shows a flow chart illustrating how the digital image display module can be processed any user interaction related to DECT telephony functions.
FIG. 3b shows a flow chart illustrating how the digital image display module and the DECT/CATiq module can be processed any incoming telephony events.
FIG. 4 shows architecture of the digital image display.
FIG. 5 shows the block diagram of the digital image display module.
FIG. 6 shows the block diagram of the DECT/CATiq module.
FIG. 7 shows an exemplary application of showing caller's photo and personal information upon receipt of an incoming call.
FIG. 7a shows an exemplary scenario of receiving an incoming call while the DECT phone is on-hook.
FIG. 7b shows an exemplary scenario of receiving an incoming call while the DECT phone is having a phone call.
FIG. 8 shows an exemplary application of selecting a contact to call on the image display and make the call over the DECT phone.
FIG. 9 shows an exemplary application of selecting a contact to email on the handset and send an email through the Internet.
FIG. 10 shows an exemplary application of sharing images with an image server through client-server connection and among other digital image display.
FIG. 11 shows a flow chart illustrating how images can be shared with remote image servers.
FIG. 12 shows an exemplary application of editing images on the image display by touch-screen function.
FIG. 13 shows an exemplary scenario of sending emails from a digital image display apparatus to another digital image display apparatus.
FIG. 14 shows an exemplary scenario of sending emails from a digital image display to a computer.
FIG. 15 shows an exemplary scenario of sending emails from a computer to a digital image display.
FIG. 16 shows a flow chart illustrating how images can be shared with other digital image displays.
FIG. 17 shows an exemplary scenario of retrieving instant news, weather information and stock quotes through RSS (Really Simple Syndication) Feed.

### DETAILED DESCRIPTION OF THE INVENTION

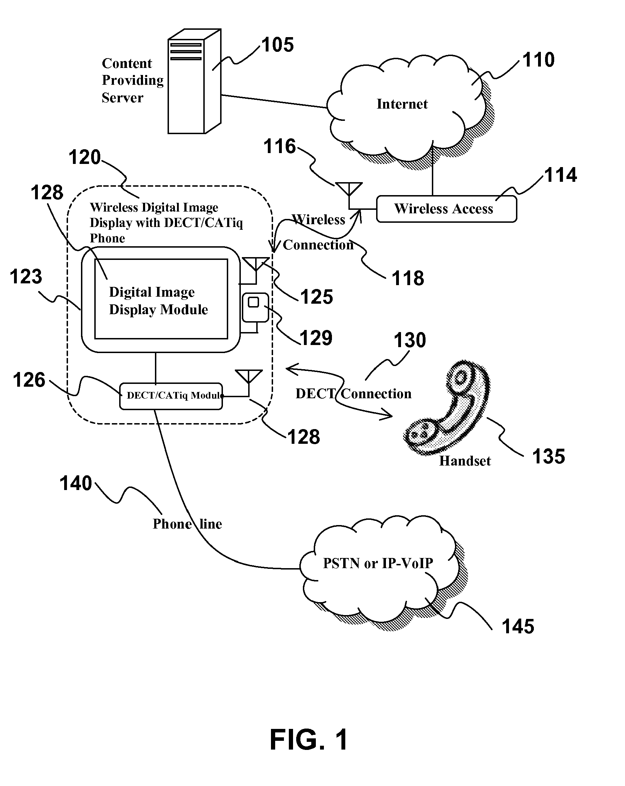

FIG. 1 shows one of the embodiments for the claimed invention. The claimed invention provides a digital image display system 120 which is accompanied optional with a DECT/CATiq phone. The digital image display system 120 is mainly made of two modules, one is a digital image display module 123 and the other is a DECT/CATiq module 126. The digital image display module 123 includes a flat panel display 128 such as OLED (Organic Light Emitting Diode), plasma, FED (Field Emission Display), SED (Surface-conduction electron Emitter Display), e-paper, CSTN LCD (Colour Super-Twist Nematic Liquid Crystal Display) and TFT LCD (Thin Film Transistor Liquid Crystal Display) but not limited to these listed flat panel display technologies. The digital image display module 123 further includes a digital camera 129 based on digital camera technologies such as CCD (Charge-Coupled Device) and CMOS (Complementary Metal-Oxide-Semiconductor) as well as a wireless transceiver 125 based on a wireless technology such as WiFi, WiMAX, GPRS, EDGE HSDPA, Bluetooth, ZigBee but not limited to these listed technologies to transmit and receive signals from a transceiver 116 of a wireless access point 114 through a wireless connection 118. The wireless transceiver 125 may be replaced by a wired modem (not shown) based on a wired broadband technology such as DSL, ADSL, cable modem, fiber optics, but not limited to these listed technologies. The wired modem (not shown) and wireless transceiver 125 may coexist in the digital image display module 123. For the sake of clarification, the scenario with the wireless transceiver 125 will be described in details. The claimed invention described in the following will also apply to the scenario with the wired modem. The digital camera 129 provides the digital image display module 123 with a capability to capture still images as well as videos without the aid of other portable image capture devices, such as PDAs, and Mobile Phones. The wireless access point 114 provides the digital image display module 123 a path to access the content providing server 105 through the Internet 110 so that the digital image display module 123 is capable to download content from the content providing server 105, to send information such as images, emails, IM, to other devices (not shown), or even to retrieve instant information such as news, weather information, and stock quotes through the Internet 110.

The DECT/CATiq module 126 has a transceiver 128 to connect with a handset 135 through a DECT/CATiq connection 130 based on a digital cordless telephone telecommunications protocol such as DECT/CATiq, 2.4GHz cordless phone, DECT 6.0 but not limited to these listed cordless phone protocols. The user speaks on the cordless handset 135 and data transmission will be carried over the DECT/CATiq connection 130. The DECT/CATiq module 126 is connected with the PSTN 145 (Public Switched Telephone Network) or IP-VoIP (Internet based telephony) through a phone line 140 so that a call can be established with other phones (not shown) through the PSTN or IP-VoIP 145 for the user to use the telephony services.

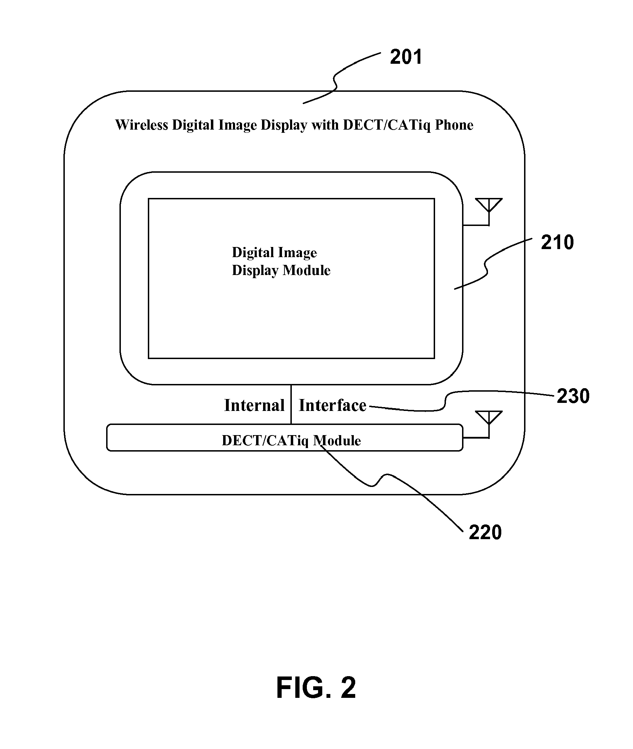

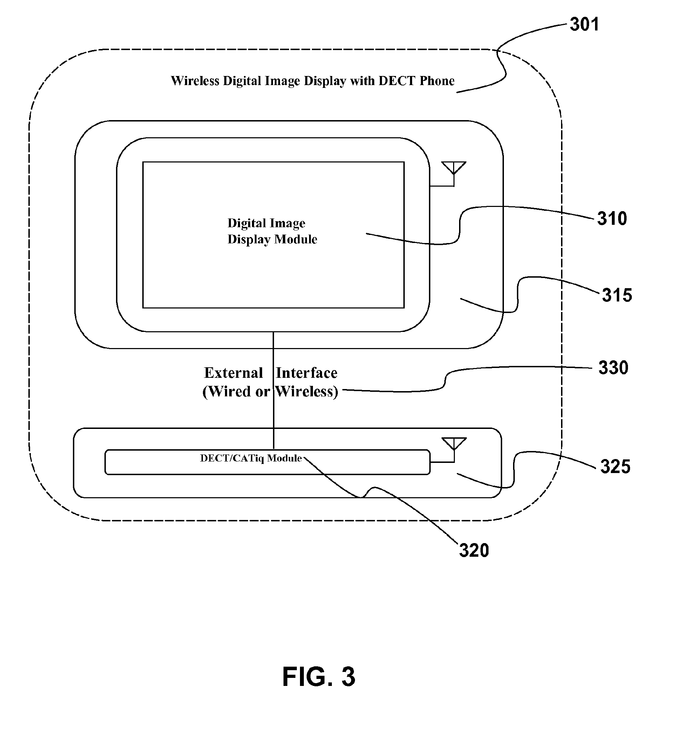

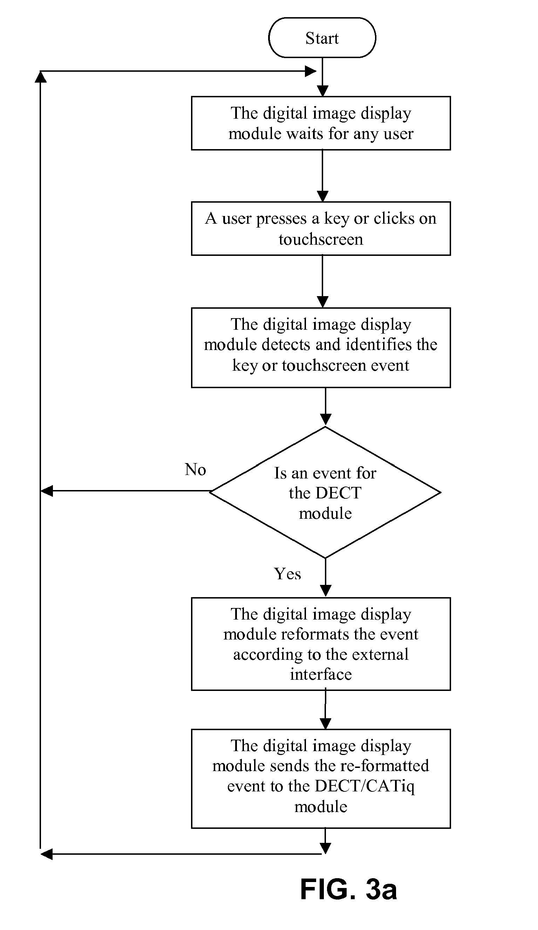

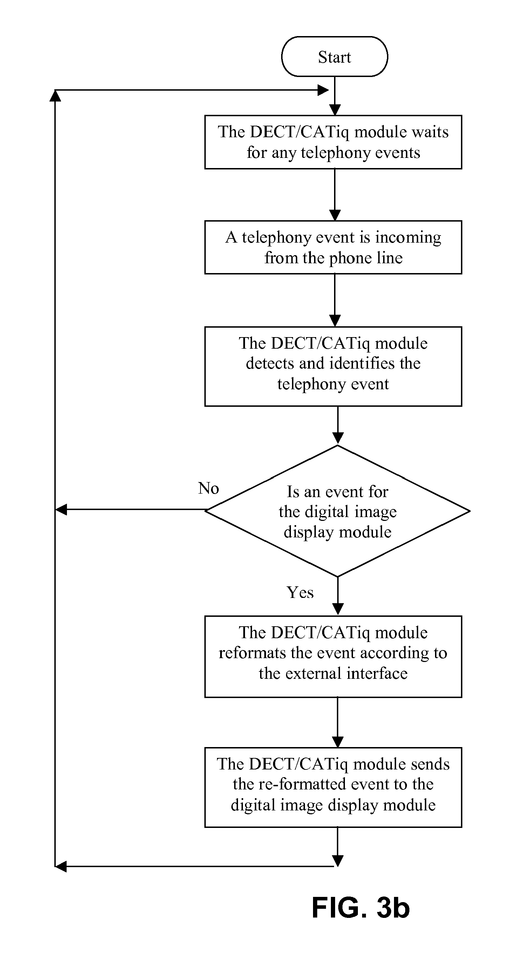

FIG. 2 and FIG. 3 show two possible variations of an embodiment of the claimed invention. In FIG. 2, both the digital image display module 210 and the DECT/CATiq module 220 are integrated into a single housing unit 201. There is an internal interface 230 to perform data exchange between the digital image display module 210 and the DECT/CATiq module 220 and such internal interface 230 can be a wired connection. In fact, the DECT/CATiq module 220 and the digital image display module are joined into one piece with all the components installed on one circuit board in another embodiment of the claimed invention (not shown). The digital image display module 210 and the DECT/CATiq module 220 are also fabricated into one single chip in one embodiment to make the claimed invention more compact.

In FIG. 3, the digital image display module 310 and the DECT/CATiq module 320 are separated into a housing unit 315 and a housing unit 325 respectively. Therefore, the digital image display module 310 and the DECT module 320 are physically isolated objects and can be arranged in different physical location. There is an external interface 330 to perform data exchange between the digital image display module 310 and the DECT module 320. The external interface can be a wired connection or a wireless connection and the data transmission is working in bi-directional between the digital image display module 310 and the DECT module 320. For a wired connection, several standard or proprietary interfaces, in different modes of data transmission, namely parallel, serial, synchronous, or asynchronous modes, might be used such as RS232, RS422, 12C (Inter-Integrated Circuit), CAN (Controller Area Network), SPI (Serial Peripheral Interface), USB (Universal Serial Bus), IEEE1394 Firewire or Ethernet but not limited to these listed wired technologies. For a wireless connection, another wireless standard interfaces based on optical or radio frequency transmission modes might be used such as DECT, Bluetooth, IrDA or ZigBee but not limited to these listed wireless technologies. Simplified flowcharts show how the digital image display module and the DECT/CATiq module process any user interaction and telephony incoming events are illustrated in FIG. 3a and FIG. 3b.

As illustrated in FIG. 3a, the digital image display module waits for any user interaction such as key presses from the keypad or clicks on the touch screen. Once a user presses a key on the keypad or clicks on the touch screen, the digital image display module looks up its event table and identifies which event corresponds to the user interaction. If the event is targeted for the DECT/CATiq module, the digital image display module reformats the event in accordance with the interface protocol, and sends to the DECT/CATiq module for any further process, such as making a phone call; otherwise, the digital image display module resumes to its normal state waiting for any user interaction again.

Similarly, as depicted in FIG. 3b, the DECT/CATiq module waits for any incoming events coming from the phone line. Once an incoming telephony signal, such as a phone call, arrives, the DECT/CATiq module looks up its internal event table and identifies which telephony event corresponds to the signal. If the telephony event is targeted for the digital image display module, the DECT/CATiq module reformats the event in accordance with the interface protocol and sends it to the digital image display module for any further process, such as showing the caller's picture; otherwise, the DECT/CATiq module resumes to its normal state waiting for any incoming telephony signal.

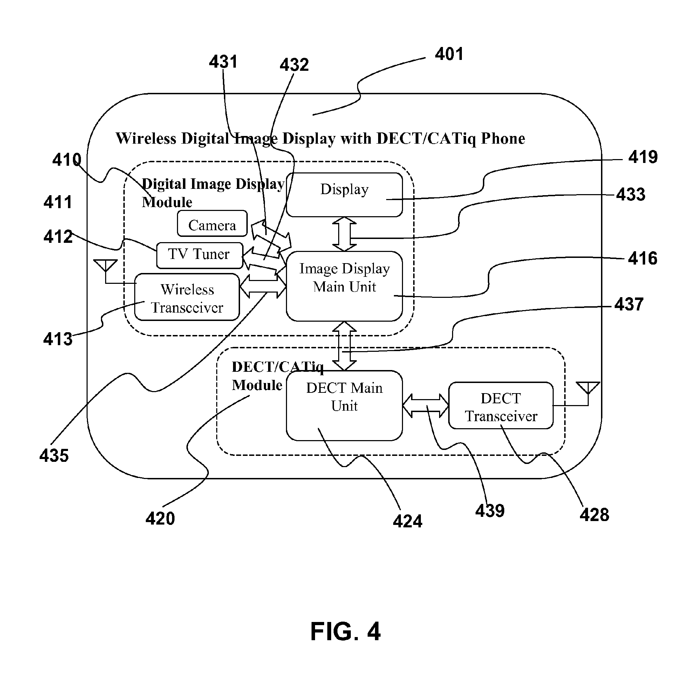

FIG. 4 shows one embodiment of the claimed invention. The cordless phone system 401 includes two main modules: the digital image display module 410 and the DECT module 420. The digital image display module 410 includes the digital camera 411, the display 419, the wireless transceiver 413, the TV tuner 412 and the image display main unit 416. The wireless transceiver 413 can be based on a wireless technology, such as WiFi, WiMAX, GPRS, EDGE, HSDPA, Bluetooth, ZigBee but not limited to these listed technologies. The image display main unit 416 controls the display 419 and exchanges data with the display 419 through the interface 433 between them. The image display main unit 416 controls and communicates with the digital camera 411 through the interface 431 between them. The image display main unit 416 controls the display 419 and exchanges data with the display 419 through the interface 433 between them. The image display main unit 416 controls and communicates with the Wireless transceiver 413 through the interface 435 between them. The digital camera 411 is used to capture a photo or used for video conferencing over the phone. A TV tuner 412 is provided in the digital image display module 410. The TV tuner 412 receives the TV signal through a built-in antenna or an external antenna (not shown). After processing the TV signal, the TV tuner 412 will output the processed signal to the image display main unit 416 through the interface 432 for showing on the display 419 the TV programme on the channel which the TV tuner 412 is tuned to.

As shown in FIG. 4, DECT/CATiq module 420 includes a DECT main unit 424 and a DECT transceiver 428. DECT main unit 424 communicates with and controls DECT transceiver 428 through an interface 439. The DECT main unit 424 and the image display main unit 416 communicate with each other through an interface 437.

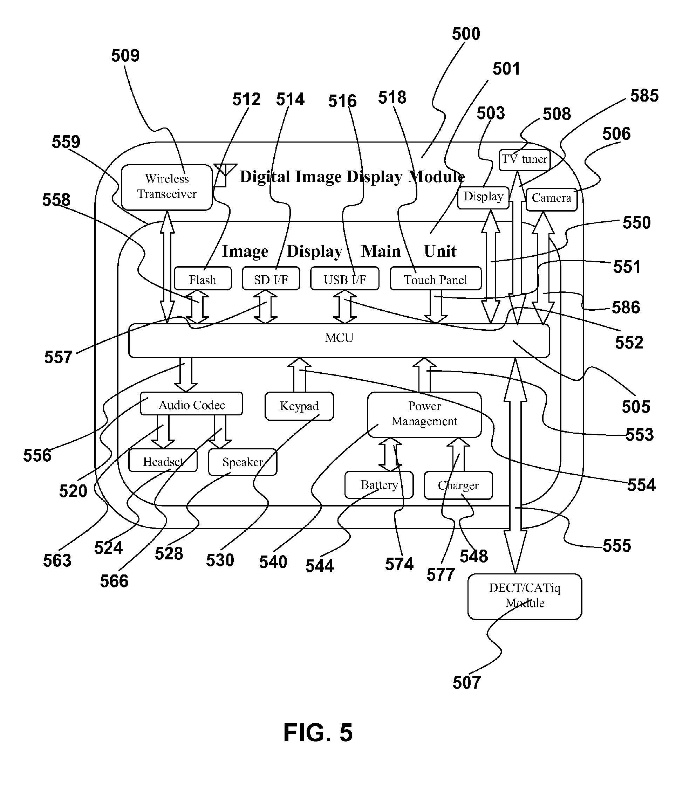

In one embodiment of the claimed invention, the digital image display module mentioned in FIG. 4 is further described in details in FIG. 5. As shown in FIG. 5, the digital image display module 500 includes the display 503 which can be a flat panel with a touch screen, the digital camera 506, the wireless transceiver 509 and the image display main unit 501. The digital camera 506 operates to capture still images as well as videos and transfers the images or videos to the digital image display module 500. The wireless transceiver 509 in various embodiments uses WiFi, WiMAX, GPRS, EDGE, HSDPA, Bluetooth, and ZigBee and operates to send/receive digital images to/from a remote external source such as a photo sharing server (not shown) through a client-server connection based on some standard or proprietary RPC (Remote Procedure Call) protocols, such as JSON-RPC, XML-RPC, and SOAP, or to/from another wireless digital image display system via a local wireless network and/or from the Internet through a wireless access point by means of direct connection between two digital image display systems based on any available Internet technologies such as peer-to-peer technology.

As shown in FIG 5, the image display main unit 501 further includes the following devices: a microcontroller (MCU) 505, a flash memory 512, a Secured Digital (SD) interface 514, a Universal Serial Bus (USB) interface 516, a touch screen 518, an audio codec 520, a headset 524, a speaker 528, a keypad 530, a power management device 540, a battery 544, and a charger 548. The MCU 505 manages the interactions of all the components in the digital image display module 500 as well as the memory resources in the digital image display module 500. The MCU 505 renders images and carries out image processing on the images. The MCU 505 is able to display images on the display 503 in many different ways of presentation such as thumbnails and slideshow. The TV tuner 508 receives the TV signal and transmits it to the MCU 505 through the data path 585. In the meantime, the MCU 505 controls the TV tuner 508 through the data path 585 and tunes the TV tuner to any desired TV channels.

The memory can be an internal flash memory 512 or other mass storage devices such as hard disks and hybrid mass storage devices (not shown). The internal flash memory 512 stores images received from remote photo sharing servers (not shown), another wireless digital image displays and other external mass storages such as a SD card through the SD interface 514, a USB flash drive through the USB interface 516. It may also stores images in other kinds of external mass storage media such as Compact Flash through a Compact Flash interface (not shown), T-flash through a T-flash interface (not shown), etc., but not limited to these listed mass storage media and interfaces.

The audio codec 520 renders audio clips in the memory and play those clips in the background through either a headset 524 or a speaker 528 during a photo slideshow. The audio codec 520 is controlled by the MCU 505 and the audio codec 520 performs signal processing such as audio decoding, volume controlling, and audio equalizing.

The MCU 505 also controls the keypad 530 and the keypad 530 is used as an input for typing and for controlling the digital image display module 500.
Touch screen 518 can be another input of command for the digital image display module 500 and the touch screen 518 communicates with the MCU 505.

The MCU 505 further interacts with the power management device 540 which includes two coexisting power sources which are the battery 544 and the charger 548. For the charger 548, it connects to the power supply and is used to charge the battery 544 or provide power to the digital image display module 500.

As shown in FIG. 5, the MCU 505 communicates with the display 503 through a data path 550, the digital camera 506 through a data path 586, the wireless transceiver 509 through a data path 559 and the DECT module 507 through a data path 555.

The MCU 505 is in direct connection with the touch screen 518 through a data path 551, with the USB interface 516 through a data path 552, with the SD interface 514 through a data path 557, with the flash memory 512 through a data path 558, with the audio codec 520 through a data path 556, with the keypad 530 through a data path 554, with the power management device 540 through an interface 553. The audio codec 520 further connects with the headset through a data path 563 and with the speaker through a data path 566. The power management device 540 further connects with the battery 544 through an interface 574 and with the charger 548 through an interface 577.

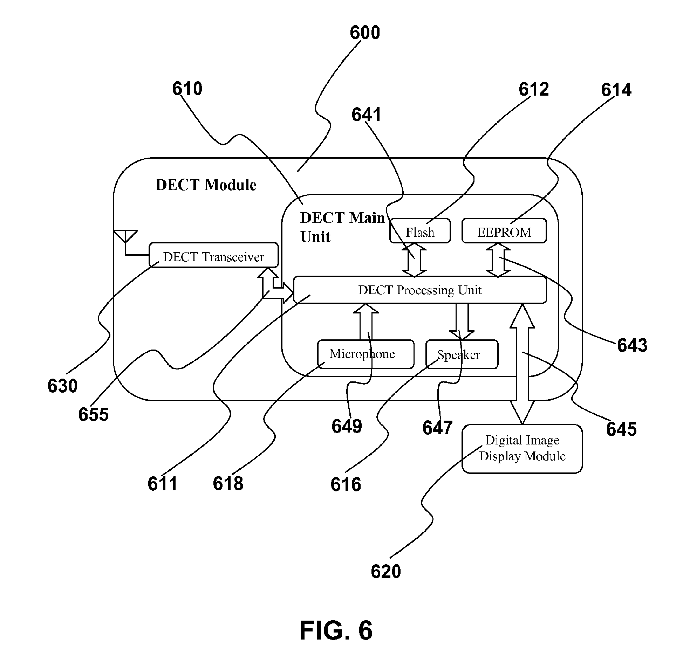

FIG. 6 shows the construction of the DECT/CATiq module in FIG. 4 in details. The DECT/CATiq module 600 includes the DECT main unit 610 and the DECT transceiver 630. The DECT transceiver 630 communicates with the DECT main unit 610 through a data path 655. The DECT main unit 610 further includes components such as a flash memory 612, an Electrically-Erasable Programmable Read-Only Memory (EEPROM) 614, a DECT processing unit 611, a microphone 618 and a speaker 616. The DECT processing unit 611 manages the interaction of the various components and the memory resources for the flash memory 612 and the EPPROM 614. The DECT processing unit 611 also controls the operations of these components and communicates with the digital image display module 620 through a data path 645. For voice and data transmission, the DECT processing unit 611 is connected with the microphone 618 through a data path 649 as a sound input, with the speaker 616 through a data path 647 to output sound, with the flash memory 612 through a data path 641 and with the EPPROM 614 through a data path 643.

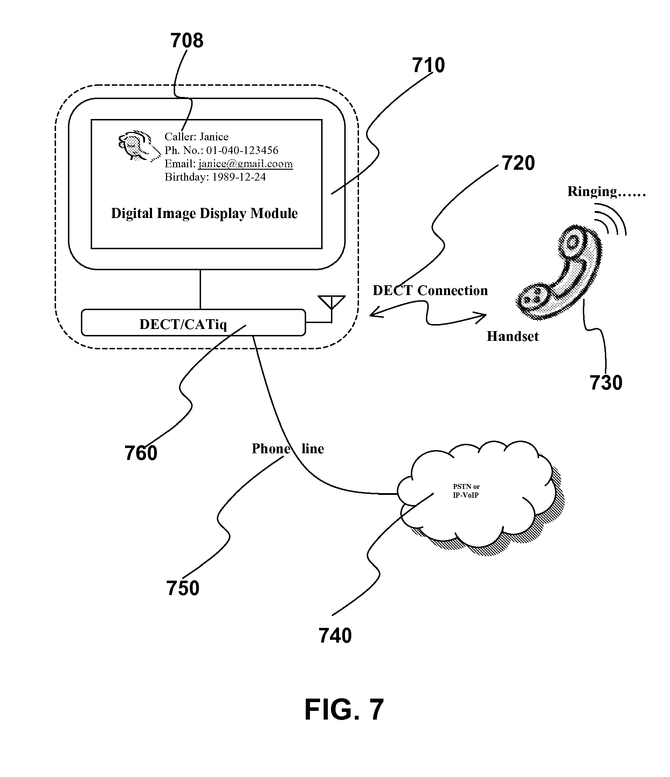

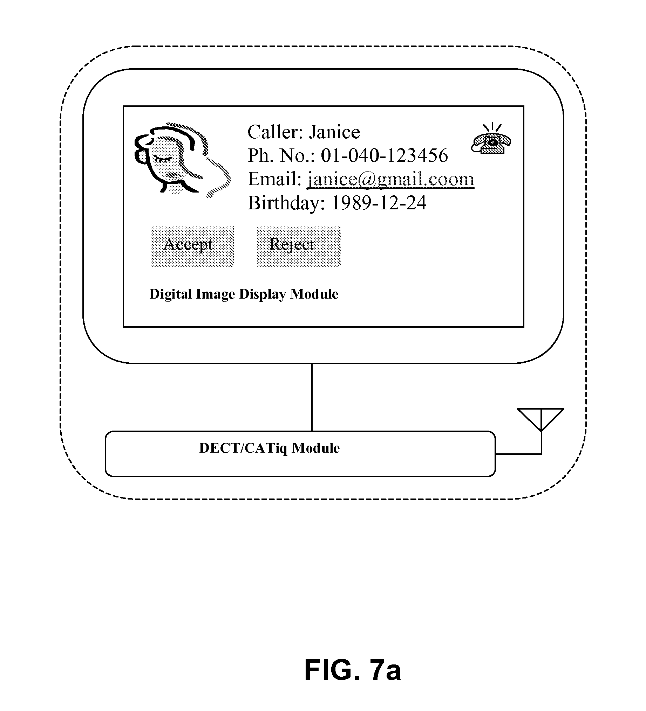

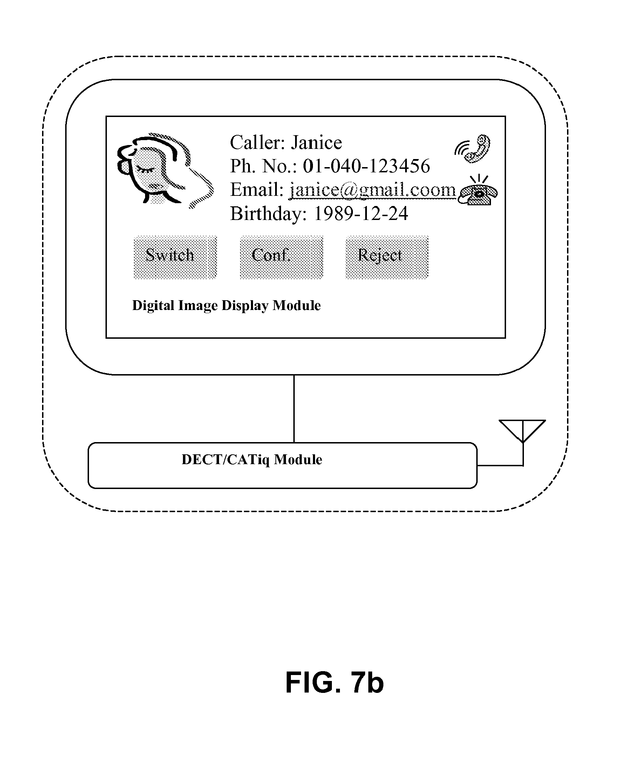

In FIG. 7, whenever the DECT/CATiq phone receives an incoming call, the DECT/CATiq module 760, the DECT processing unit in particular (not shown), will process the call signal from the PSTN or IP-VoIP 740 over the phone line 750. From the call signal, the DECT/CATiq module 760 will retrieve the caller information such as the phone number and output the same to the digital image display module 710. The caller information 708 will not only be displayed on the digital image display module 710 after retrieving the caller information 708 from the memory of the digital image display module 710 but also be used to find the corresponding information in the contact database in the internal memory of the digital image display module 710 such as the caller's photo, name, email, birthday, anniversary, ... and so forth. At the same time, the DECT/CATiq module 760 also sends a signal to the cordless handset 730 through the DECT connection 720 for ringing and allowing the user to answer the call over the handset 730 or using the speaker on the DECT/CATiq module 760.

As the digital image display module is with a large display and a touch screen, it provides a GUI (Graphical User Interface) for normal phone operations, such as accept an incoming call. It could also offer another option of using a keypad for normal operations. FIG. 7a exemplifies a graphic user interface for a scenario that an incoming call arrives from the phone line while the DECT/CATiq module is on-hook or idle. Apart from the ringing sound from the handset, a flashing ringing phone icon on the top right hand corner signifies an incoming call. If a caller corresponding information in accordance with the call signal from the phone line can be found in the internal contact database, the caller information will show on the digital image display module; otherwise an unknown caller information will display. Also, two additional GUI buttons showing on the display are provided for accepting and rejecting the incoming call. If the user clicks the either buttons on the display by his/her fingertip or a stylus, the corresponding touch screen event will be triggered and eventually either the call-accept event or the call-reject event will be passed to the DECT/CATiq module to mimic the operations on the DECT handset.

FIG. 7b exemplifies a graphic user interface for a scenario that an incoming call arrives from the phone line while the DECT/CATiq module is having a phone call. A off-hook icon on the top right hand corner signifies having a phone call. If a new call arrives during an existing phone call, the new caller information will show on the digital image display module as in FIG. 7a; otherwise an unknown caller information will display. A flashing ringing icon will show right below the off-hook icon for signaling the user of a new incoming call. Also, three additional GUI buttons showing on the display are provided for switching to the new incoming call, making a conference call and rejecting the new incoming call. If the user clicks the either buttons on the display by his/her fingertip or a stylus, the corresponding touch screen event will be triggered and eventually the corresponding telephony operation event will be passed to the DECT/CATiq module to mimic the operations on the DECT handset.

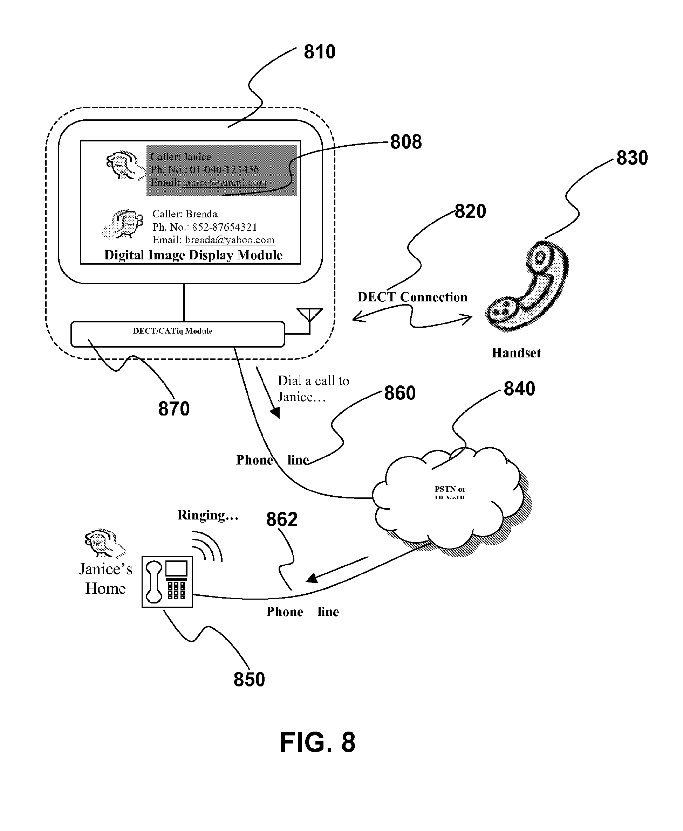

Apart from the conventional way of dialing a phone call with a handset, FIG. 8 shows one embodiment of the claimed invention which offers a feature of browsing the address book stored in the memory of the digital image display module 810 and choosing a recipient 808 for initiating a telephone call or sending SMS to the recipient 808. Information of different individuals is stored in the memory of the digital image display module 810 either input by keypad, synchronize with the address book on a PC, imported from external memory such as SD card or USB flash drive (not shown). After the call recipient has been chosen, the user can also select whether a connection is established for making a telephone call or sending a SMS. Then the microcontroller will output a signal to provide the DECT/CATiq module 870 with the dialing instructions and the number to be dialed for a telephone call or an SMS. If it is a telephone call, the processing unit in the DECT/CATiq module 870 will provide a dialing tone to the cordless handset 830 through the DECT/CATiq connection 820 or the speaker on the DECT/CATiq module 870. If it is an SMS, the user will be requested to provide the message either through the digital image display module 808 or the handset 830. Then a dialing signal or an SMS will go through the PSTN 840 via phone lines 860, 862 to the recipient's telephone device 850.

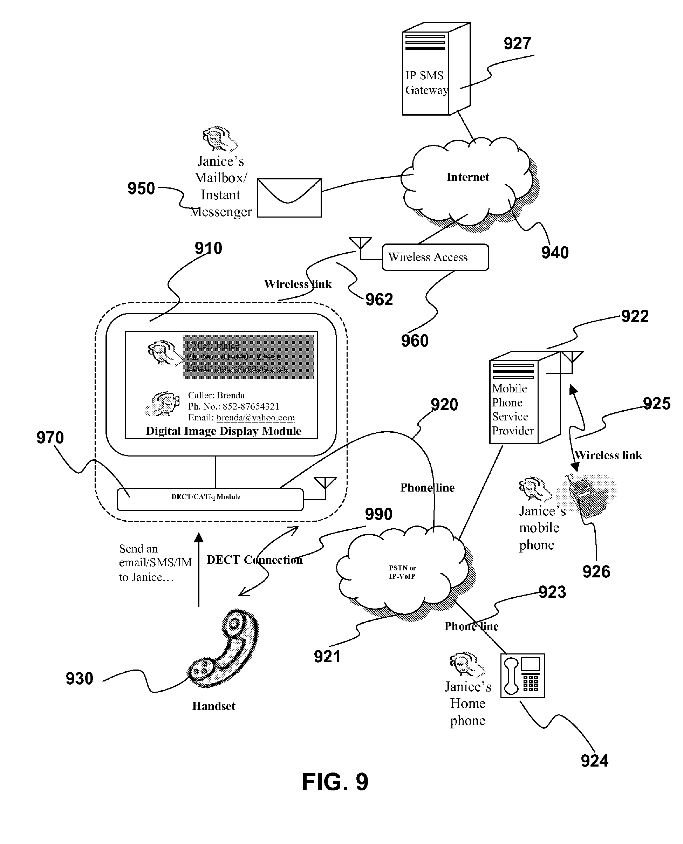

By utilizing the claimed device, a recipient for receiving a message is picked through the DECT/CATiq module and the message can be in formats of email, instant message or SMS. According to one embodiment of the claimed invention as shown in FIG. 9, a message recipient can be chosen by inputting the desired message recipient's phone number into the DECT/CATiq module 970 or the handset 930. The phone number information will then be transmitted through DECT connection 990 to and processed by the DECT processing unit in the DECT/CATiq module 970 to convert into signals understandable by the microcontroller in the digital image display module 910. Then the microcontroller will search through the address book in the digital image display module 910 to get the message recipient's information. Furthermore, the content of the message can be input through the keypad or the touch screen of the digital image display module 910. Then the user needs to select which format the message is to be sent. Images can also be chosen from the digital image display module 910 to be attached with the email. For email and instant message, the message will be sent through the wireless link 962 to the wireless access point 960 to the Internet 940 through which the message will be routed to the desired message recipient 950. While for SMS, the message will be sent through the phone line 920 to PSTN 921 to either the phone line 923 or the mobile phone service provider 922 to the wireless link 925 through which the message will be routed to either the desired SMS recipients 924 and 926. In case of no message service through the phone line 920 to PSTN 921, the message will be sent through the wireless link 962 to the wireless access point 960 to the Internet 940 to the IP SMS gateway 927 to the Internet 940 to the mobile phone service provider 922 to the wireless link 925 through which the message will be routed to the desired message recipient 926.

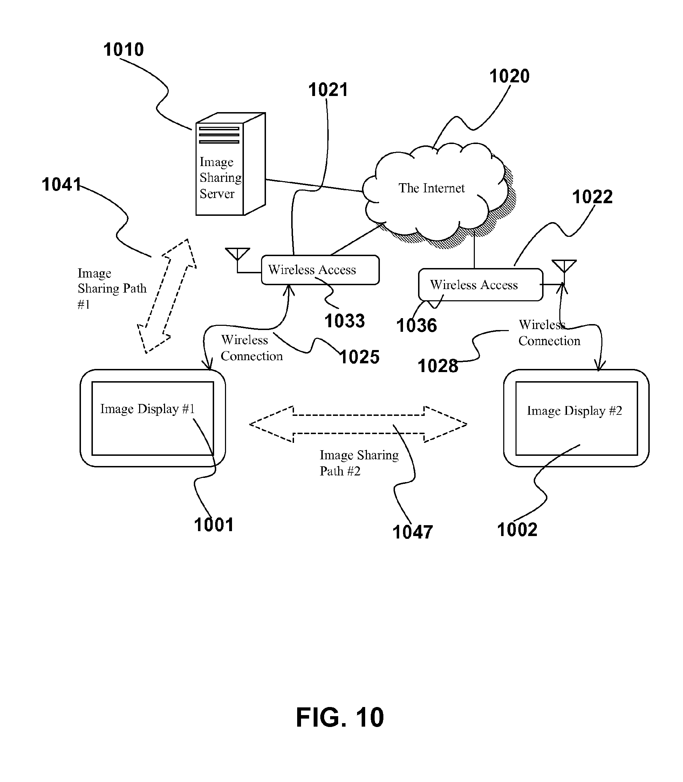

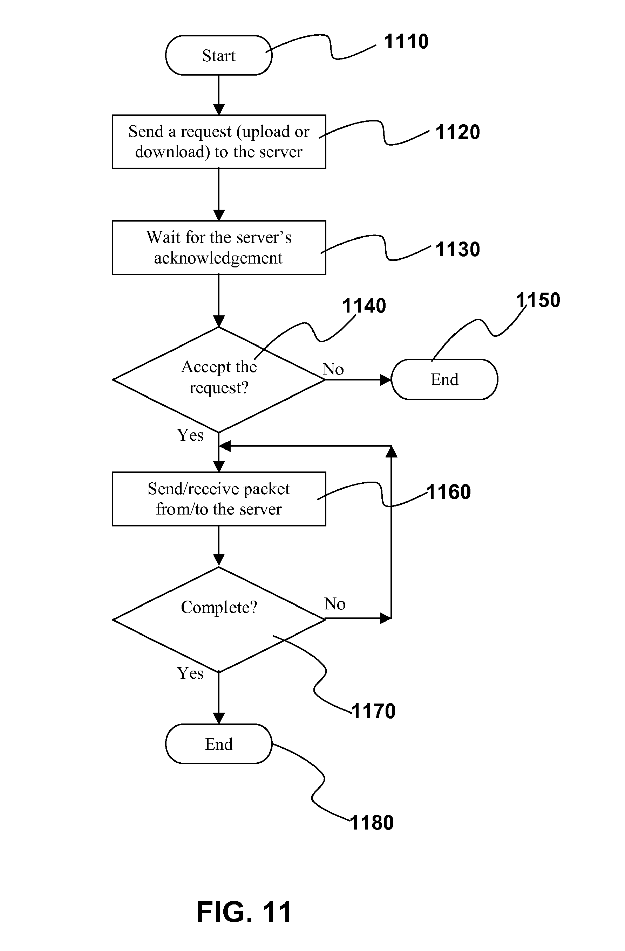

In FIG. 10, one embodiment of the claimed invention of image sharing with a image sharing server 1010 which is a server where images are stored. The digital image display modules 1001 or 1002 might employ any state-of-the-art protocols, such as FTP, HTTP, SMTP, POP3, IMAP (Internet Message Access Protocol), SOAP (Simple Object Access Protocol), COBRA (Common Object Request Broker Architecture) and others to communicate with the image sharing server 1010 to access the images. For uploading or downloading photos, the digital image display modules 1001, 1002 would send a request, by means such as Remote Procedure Call (RPC), to one of the pre-selected servers 1010 located in the Internet via the wireless transceiver after the wireless link such as wireless connections 1025, 1028 have been established with the wireless access points 1021, 1022. Once the image sharing server 1010 has received the request, it will carry out client authentication and then it will acknowledge the client by either accepting or rejecting the request depending on whether the authentication was passed or not. If the request has been accepted, the server would then process the requested service (uploading or downloading photos). The simplified flowchart at the digital image display module (client side) is shown in FIG. 11.

As shown in FIG. 11, after receiving the input from the user at the start step 1110, the digital image display module will send a request to the server which may be a request for downloading or uploading images in the request step 1120. Then the digital image display module will wait for the server's acknowledgement on receipt of the request in the acknowledgement step 1130 where the connection is established between the digital image display module and the server. Then the authentication will be carried out by the server to check if the digital image display module has the access right at the authentication step 1140. If the digital image display module cannot provide the correct information for authentication, the request will be denied and the process will end at the termination step 1150. If the digital image display passes all the checking, data transmission in form of data packets will be initiated and takes place in the direction of either downloading from the server or uploading to the server in the data transmission step 1160. Then it will be checked if the data transmission is completed or not at the verification step 1170. If it is completed, then the process will come to an end at the termination step 1180.

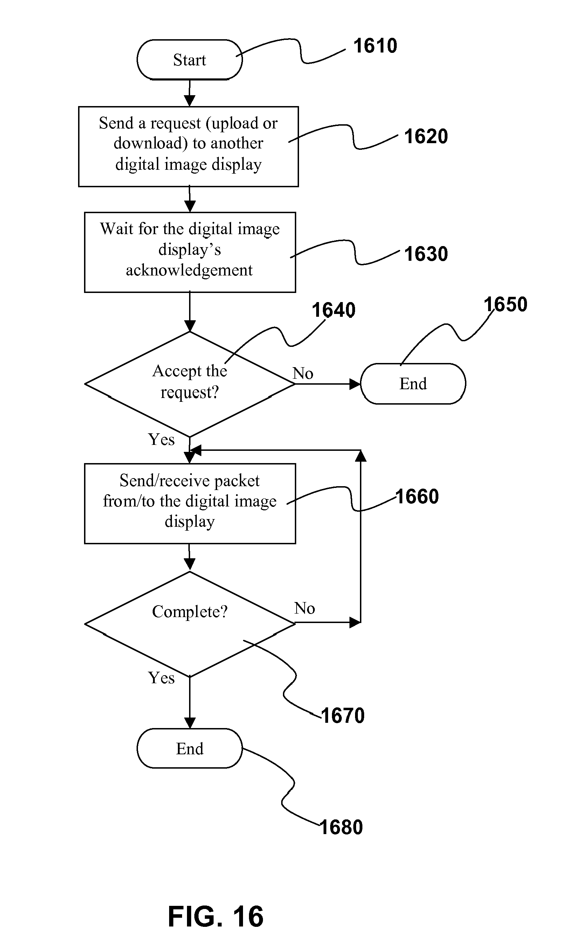

Besides the image sharing between servers (image sharing server 1010) and clients (image displays 1001, 1002) through the path 1041, another embodiment of the claimed invention provides another image sharing path 1047 between the digital image display modules 1001, 1002 are represented in FIG. 10. Images can be uploaded to and downloaded from other digital image display modules 1001, 1002 through the Internet by any available technologies such as client-server topology, peer-to-peer topology, hybrid topology but not limited to the listed sharing technologies. The digital image display modules 1001, 1002 establish a connection with the Internet 1020 through wireless access points 1033, 1036. Then the first digital image display module 1001 sends a request to the wireless access point 1033 through wireless connection 1025 to the Internet 1020. Then the request will be routed to the second digital image display module 1002 through the Internet 1020 to the wireless access point 1022 and reach the second digital image display module 1002. Authentication process will be required before any data transmission is allowed between the first digital image display module 1001 and the second digital image display module 1002. The simplified flowchart at the digital image display module is shown in FIG. 16.

As shown in FIG. 16, after the receiving the input from the user at the start step 1610, the first digital image display module will send a request to another digital image display module, the so-called second digital image display, which may be a request for downloading or uploading images in the request step 1620. Then the first digital image display module will wait for the second digital image display's acknowledgement on receipt of the request in the acknowledgement step 1630 where the connection is established between the first digital image display module and the second digital image display. Then an authentication will be carried out at the authentication step 1640 by the second digital image display to check if the first digital image display module is allowed for downloading or uploading images. If the digital image display module is rejected by the user of the second digital image display, or cannot provide the correct information for authentication, the request will be denied and the process will end at the termination step 1650. If the first digital image display passes all the checking, data transmission in form of data packets will be initiated and takes place in the direction of either downloading from the second digital image display or uploading to the second digital image display in the data transmission step 1660. Then it will be checked if the data transmission is completed or not at the verification step 1670. If it is completed, then the process will come to an end at the termination step 1680.

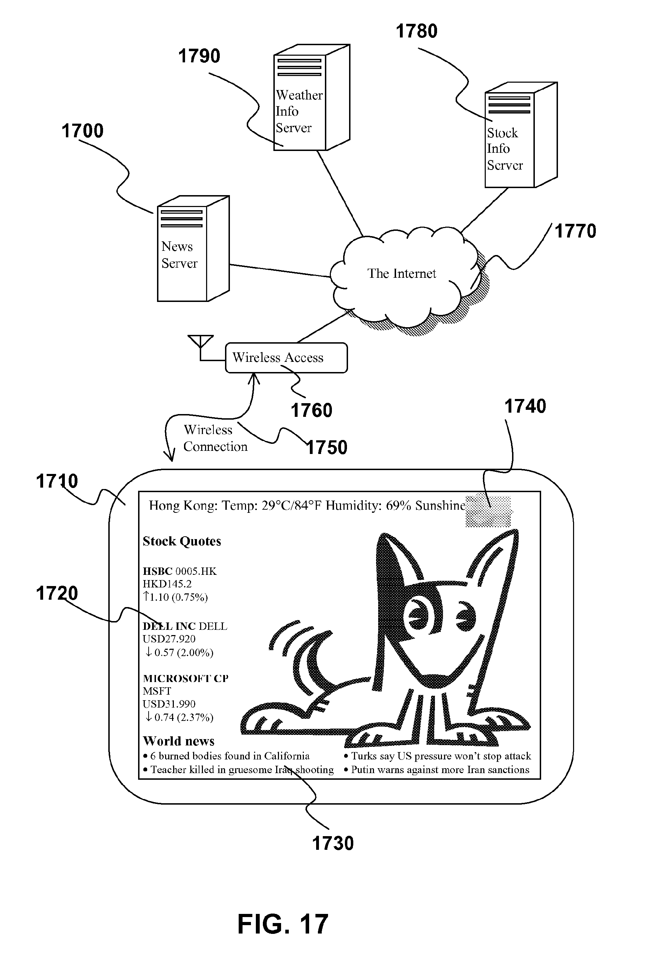

According to another embodiment of the claimed invention, the digital image display is capable of retrieving instant information, such as News Headline, Weather Information, Stock Quotes, but not limited to these listed instant information types, as shown in FIG. 17, based on the instant information syndication technology such as RSS Feed but not limited to the named technology. The digital image display module 1710 regularly retrieves data from the news server 1700, the weather information server 1790, the stock information server 1780 or other information servers (not shown) through the wireless link 1750 to the wireless access point 1760 which provides connections to the Internet 1770. Then the retrieved information 1720, 1740 might be overlaid over the images or applications displayed on the flat panel display 1730 as shown in FIG. 17.

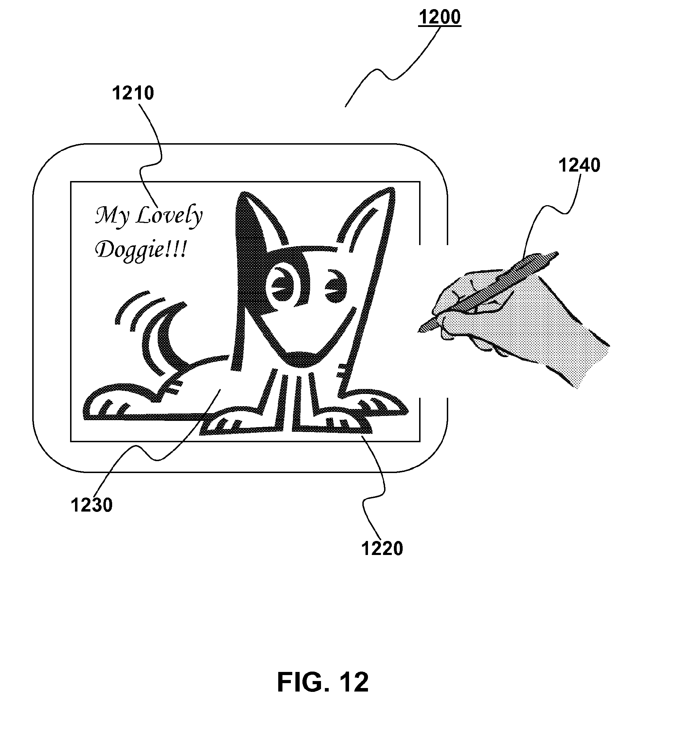

According to another embodiment of the claimed invention, the digital image display 1200 is equipped with touch-screen functionality as shown in FIG. 12. Users uses the touch screen 1220 as an input interface for operating the digital image display 1200 such as switching among different image display modes (not shown) such as slideshows and thumbnails, selecting background audio (not shown), writing words 1210 or sketching drawings 1230 on the image 1230, editing the image 1230 and browsing webpages (not shown) by the use of a stylus 1240 or a fingertip (not shown).

Furthermore, the touch screen 1220 may be provided with a software or hardware engine (not shown) for handwriting recognition so that text can be input by writing on the touch screen 1220 instead of typing. Text input for purposes such as writing an email/IM/SMS or inputting text during web browsing can be done by writing on the screen 1220.

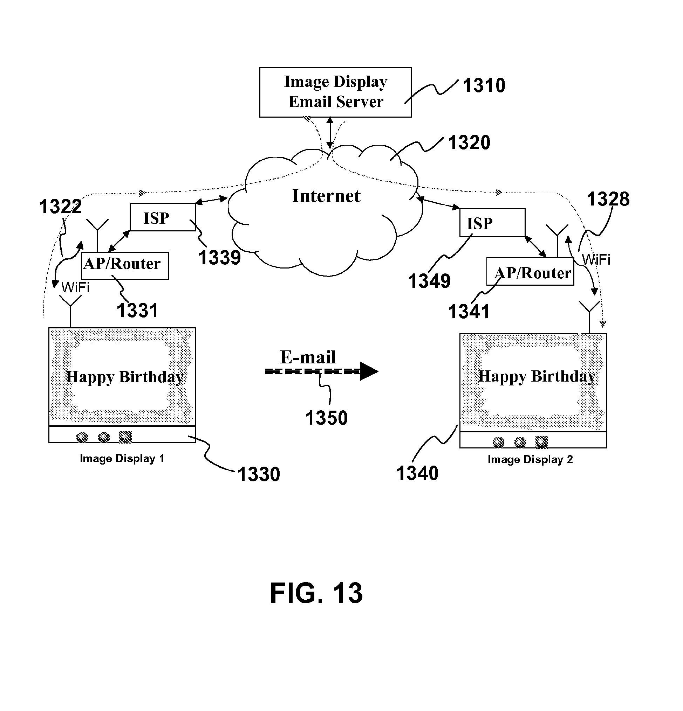

FIG. 13, FIG. 14 and FIG. 15 illustrate 3 scenarios of how an image display according to one embodiment of the claimed invention sends and receives emails. Images stored in the image display can also be attached in an email to be sent by the image displays. For the situations of sending and receiving SMS through the Internet, it is similar to those scenarios as shown in FIG. 13, 14, and 15 where the email servers are replaced by IP SMS gateways while the computers are substituted with mobile phones. In FIG. 13, emails 1350 are communicated among image displays 1330, 1340 and all image displays 1330, 1340 are connected to an image display email server 1310 through the Internet 1320. In order to access to the Internet 1320 for sending an email from a first image display 1330 to a second image display 1340, both image displays 1330 and 1340 are connected to an access point 1331, 1341 which can also be a router through WiFi links 1322, 1328 or other wired or wireless links such as WLAN (Wireless Local Area Network), Bluetooth protocol, IrDA (Infrared Data) protocol, GSM (Global System for Mobile communications) protocol, CDMA (Code Division Media Access) protocol and 3G (Third Generation) protocol. These access points 1331, 1341, which can also be routers, are connected to the same or different internet service providers (ISP) through which the Internet 1320 is accessed. Therefore, when the first image display 1330 sends an email 1350 to the second image display 1340, the email go through the access point 1331 and the first ISP 1339 to reach the image display email server 1310. The image display email server 1310 is a proprietary email server used by the image display users only. Then the second image display 1330 will retrieve the email 1350 from the image display email server 1310 through the access point 1341 and the second ISP 1349 by logging onto the email account hosted in the image display email server 1310.

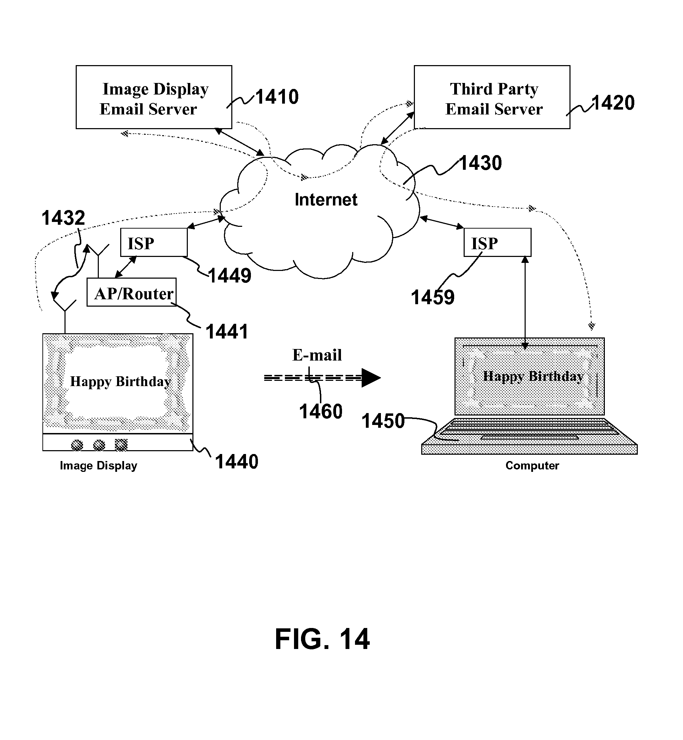

In FIG. 14, an image display 1440 is used to send email 1460 to others who are not an user of an image display 1440 and they access their own email accounts hosted in other email servers 1420 through computer 1450. The image display 1440 sends an email 1460 to an access point 1441 which can also be a router through a WiFi link 1432 or other wired or wireless links such as WLAN (Wireless Local Area Network), Bluetooth protocol, IrDA (Infrared Data) protocol, GSM (Global System for Mobile communications) protocol, CDMA (Code Division Media Access) protocol and 3G (Third Generation) protocol. Then the access point 1441 forwards the email 1460 to the first ISP 1449 which provides the connection to the Internet 1430. The email 1460 will then reach the image display email server 1410 before the image display email server 1410 sends the email 1460 to the third party email server 1420. The image display email server 1310 is a proprietary email server used by the image display users only. The third party email server 1420 includes all the available email servers provided by various service providers. Then a computer 1450 with the internet connection capability provided by the second ISP 1459 is used to access the third party email server 1420 to retrieve the email 1460.

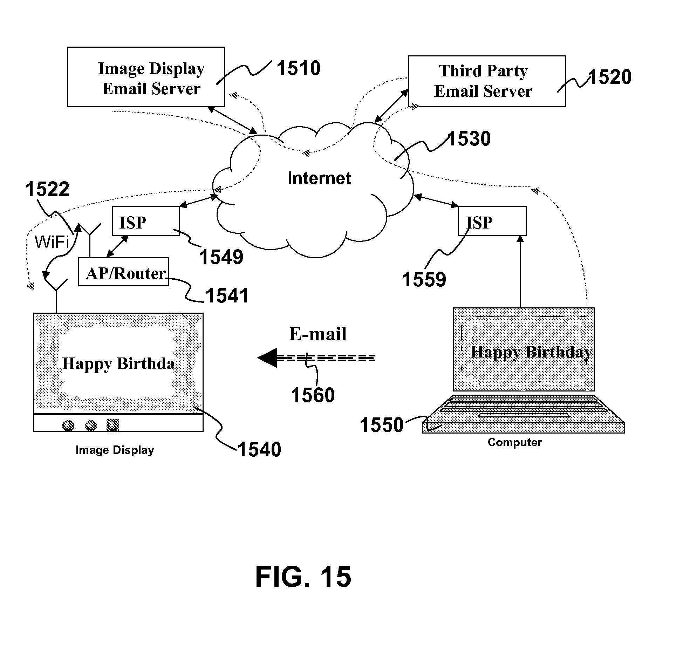

FIG. 15 illustrates how an email 1560 is sent from a computer user to an image display user. The computer 1550 is used to compose the email 1560 and send the email 1560 to the image display 1540 through the Internet 1530. The computer 1550 gets the access to the Internet 1530 through the second ISP 1559 so that the email 1560 can reach the third party email server 1520. Then the third party email server 1520 can send the email 1560 to the image display email server 1510 where the image display 1540 establishes a link to retrieve the email 1560. The image display email server 1310 is a proprietary email server used by the image display users only. The third party email server 1420 includes all the available email servers provided by various service providers. Therefore the image display 1540 can establishes a WiFi link 1522 or any wired or wireless connection such as WLAN (Wireless Local Area Network), Bluetooth protocol, IrDA (Infrared Data) protocol, GSM (Global System for Mobile communications) protocol, CDMA (Code Division Media Access) protocol and 3G (Third Generation) protocol in order to connect to the access point 1541 which can be a router alternatively. Then the image display 1540 gains an access to the Internet 1530 with the service provided by the first ISP 1549 through which the email account hosted in the image display email server 1510 is reached to get the email 1560.

The description of preferred embodiments of the claimed invention are not exhaustive and any update or modifications to them are obvious to those skilled in the art, and therefore reference is made to the appending claims for determining the scope of the claimed invention.

### INDUSTRIAL APPLICABILITY

The disclosed method and related device have industrial applicability in the consumer electronics. The disclosed method and related device can find applications in the following: digital phone frames with DECT cordless phones; image display with cordless phone; advertisement display and others.

## Claims

1. An image display system, comprising:
an image display apparatus incorporating a touch screen display panel;
a message sending interface; and
a data communication interface.

2. The image display system according to claim 1, wherein said image display system additionally comprises a camera and/or a TV tuner and/or one or more external storage interfaces.

3. The image display system according to claim 1, wherein said touch screen display panel is a resistive touch screen display panel and/or said touch screen display panel is selected from a group of display panels consisting of OLED display panel, FED display panel, SED display panel, plasma display panel, e-paper display panel, CSTN LCD display panel and TFT LCD display panel.

4. The image display system according to claim 1, wherein said image display system additionally comprises a telephone interface, a telephone module and a telephone handset and/or said telephone interface is a wireless telephone interface coupling to a network selected from a group of networks consisting of VoIP network, GSM network, 3G, CDMA and CDMA2000 and/or said telephone interface is a wired telephone interface coupling to a PSTN.

5. The image display system according to claim 4, wherein said telephone interface is a wired telephone interface coupling to a VoIP network.

6. The image display system according to claim 4, wherein said telephone handset incorporates DECT protocol.

7. The image display system according to claim 4, wherein said data communication interface is a wired interface coupling to the Internet.

8. The image display system according to claim 6, wherein said data communication interface is a wireless interface coupling to a network selected from a group of networks consisting of WLAN, Internet, Bluetooth network, Infrared network and ZigBee network.

9. An image display system, comprising:
a wireless data communication interface;
an image display apparatus incorporating a touch screen display panel;
a telephone interface for coupling a telephone module to a telephony network; and
a handset apparatus for wirelessly communicating with said telephone module using a cordless telecommunications protocol.

10. The image display system according to claim 9, wherein said image display system additionally comprises a message module and/or
said message module displays, transmits and receives a message selected from a group of messages consisting of email, instant message (IM) and short message service (SMS).

11. The image display system according to claim 10, wherein said telephone module communicates with said message module and selects one or more recipients of said message.

12. The image display system according to claim 10, wherein said image display apparatus communicates with said message module and selects one or more recipients of said message.

13. The image display system according to claim 10, wherein said wireless data communication interface exchanges data with one or more remote image display systems.

14. The image display system according to claim 10, wherein said wireless data communication interface exchanges data with one or more computer servers.
